# EUROPÄISCHE PATENTSCHRIFT

(11) **EP 3 329 060 B1**
(45) Veröffentlichungstag und Bekanntmachung des Hinweises auf die Patenterteilung: **30.09.2020**
(21) Anmeldenummer: 16744718.4
(22) Anmeldetag: 26.07.2016
(51) Int. Cl.: E04B 1/41, B23K 26/24, B23K 33/00, B23K 26/244

(54) **HERSTELLUNGSVERFAHREN FÜR EINE ANKERSCHIENE SOWIE ANKERSCHIENE**
METHOD OF MANUFACTURING AN ANCHOR BAR AND ANCHOR BAR
PROCEDE DE FABRICATION D'UN RAIL DE FIXATION ET RAIL DE FIXATION

(30) Priorität: 29.07.2015 EP 15178961
(43) Veröffentlichungstag der Anmeldung: 06.06.2018
(73) Patentinhaber: Hilti Aktiengesellschaft, 9494 Schaan (LI)
(72) Erfinder: STROISSNIGG, Horst, 86932 Pürgen (DE); KEIM, Jürgen, 86916 Kaufering (DE); PIONTEK, Damian, 86836 Untermeitingen (DE); KRAFT, Robert, 76337 Waldbronn (DE)
(74) Vertreter: Hilti Aktiengesellschaft Corporate Intellectual Property
(86) Internationale Anmeldenummer: PCT/EP2016/067726
(87) Internationale Veröffentlichungsnummer: WO 2017/017078

(56) Entgegenhaltungen:
- EP-A1- 2 551 416
- EP-A2- 2 199 475
- DE-A1- 4 326 322

## Beschreibung

Die Erfindung betrifft ein Verfahren zum Herstellen einer Ankerschiene mit einem Schienenkörper sowie mit Ankerkörpern, welche am Schienenkörper befestigt sind. Die Erfindung betrifft ferner eine Ankerschiene mit einem Schienenkörper sowie mit Ankerkörpern, welche am Schienenkörper befestigt sind.

Die DE 102008036523 A1 beschreibt eine Ankerschiene mit aussenseitig aufgeschweissten Ankerkörpern, wobei für Schiene und Ankerkörper besondere Materialien vorgesehen sind. Eine weitere Schiene mit aussenseitig aufgeschweissten Ankerkörpern geht aus der US 2009064626 A1 hervor. Gemäss DE 19642331 C2 werden Ankerkörper in einem Reibschweissverfahren an der Schienenaussenseite befestigt. Gemäss EP0724678 A1 werden Ankerkörper in einem Punktschweissverfahren an der Schienenaussenseite befestigt.

Die DE 4411791 A1 betrifft ein Verfahren zum Herstellen von mit Ankerbolzen versehenen Ankerschienen, bei dem eine ein Innengewinde aufweisende Ankermutter mittels elektrischer Widerstandsschweissung am Schienenkörper befestigt wird und sodann ein Ankerkörper in die Ankermutter eingeschraubt wird.

US 2014318072 A1 zeigt Ankerkörper mit schieneninnenseitig verbreitertem Ankerfuss und zeigt ferner aussenseitig auf den Schienenkörper aufgeschweisste Ankerkörper.

Die EP 1067248 B1 beschreibt eine Ankerschiene, bei welcher die Ankerkörper ein Aussengewinde und im Schieneninneren einen verbreiterten Ankerfuss aufweisen, wobei die Ankerkörper mittels auf das Aussengewinde aufgeschraubter Muttern an der Ankerschiene gesichert werden. Gemäss US 2010170185 A1 werden am Schienenkörper einer Ankerschiene Nieten befestigt, in welche die Ankerkörper eingeschraubt werden, wobei auch eine Schraubensicherung zum Einsatz kommen kann. Die US 2010146904 A1 lehrt, am Schienenrücken in den Innenraum des Schienenkörpers gerichtete Durchzüge vorzusehen, in welche Ankerkörper eingeschraubt werden.

Die DE 19907475 C1 beschreibt ein Verfahren zum Herstellen einer Ankerschiene, bei dem ein Ankerkörper von der Innenseite eines Schienenkörpers durch eine Durchgangsöffnung im Schienenkörper eingesteckt wird, wobei der Ankerfuss schieneninnenseitig an den Schienenkörper zum Anliegen gebracht wird, und bei dem schienenaussenseitig ein Schneidwerkzeug relativ zum Ankerfuss in Richtung auf den Ankerfuss bewegt wird und im Zuge der Bewegung vom Ankerschaft Material abgestreift wird, so dass schienenaussenseitig ein am Schienenkörper anliegender Abstreifkragen gebildet wird.

Die EP 0758039 B1 offenbart ein Verfahren zum Herstellen einer Ankerschiene, bei dem ein Ankerkörper durch eine Öffnung im Schienenkörper durchgeführt wird und anschliessend der innerhalb des Schienenkörpers befindliche Abschnitt des Ankerkörpers durch Stauchen verformt und der Ankerkörper dadurch fixiert wird. Weitere Ankerkörper mit gestauchter Geometrie gehen aus der US 5743062 A hervor.

EP 0400588 A1 betrifft einen Stauchanker für Ankerschienen mit einem Kopf, einem Schaft und einem Fuss, der zur Stauchverbindung mit dem Ankerschienenrücken dient, wobei der Kopf und der Schaft aus allgemeinem Baustahl und der Fuss aus nichtrostendem Stahl gebildet sind, und der Fuss mit dem Schaft durch Verschweissen verbunden ist.

Die US 6682253 B beschreibt eine Montageschiene, welche aus einem Profilelement und einem querschnittsgrösseren Hohlprofil besteht, wobei das Profilelement durch Laserstrahlschweissen mit dem Hohlprofil verbunden ist.

Die EP 2 551 416 A1 zeigt eine Ankerschiene, bei dem die Ankerkörper formschlüssig und/oder kraftschlüssig und zusätzlich auch stoffschlüssig befestigt sein können. Beispielsweise kann ein Klebstoff vorgesehen werden, der eine Schraubverbindung sichert.

Aufgabe der Erfindung ist es, ein Verfahren zum Herstellen einer Ankerschiene, mit dem in besonders einfacher und wirtschaftlicher Weise eine besonders zuverlässige, insbesondere sowohl zug- als auch druckfeste, Verbindung zwischen den Ankerkörpern und dem Schienenkörper erhalten werden kann, und eine entsprechende Ankerschiene anzugeben.

Die Aufgabe wird erfindungsgemäss durch ein Herstellungsverfahren mit den Merkmalen des Anspruchs 1 und eine Ankerschiene mit den Merkmalen des Anspruchs 8 gelöst. Bevorzugte Ausführungsformen sind in den jeweils abhängigen Ansprüchen angegeben.

Bei einem erfindungsgemässen Herstellungsverfahren ist vorgesehen, dass
- ein Befestigungskörper, welcher mit einer Öffnung versehen ist, im Innenraum des Schienenkörpers angeordnet wird,
- ein Ankerkörper durch eine im Schienenkörper vorgesehene Durchgangsöffnung hindurchgeführt wird,
- der Ankerkörper in der Öffnung des Befestigungskörpers angeordnet wird, und
- der Ankerkörper in einem Fügeprozess zugleich mit dem Befestigungskörper und mit dem Schienenkörper unmittelbar stoffschlüssig verbunden wird.

Ein Grundgedanke der Erfindung kann darin gesehen werden, einen Befestigungskörper im Innenraum des Schienenkörpers vorzusehen, in welchen der Ankerkörper mit seinem Ankerfuss eingeführt wird, und den Ankerkörper mit dem Befestigungskörper unter gleichzeitiger Verbindung mit dem Schienenkörper stoffschlüssig zu fügen. Es ist also ein gleichzeitiges stoffschlüssiges Verbinden von Befestigungskörper, Ankerkörper und Schienenkörper vorgesehen. Insbesondere kann eine gemeinsame Schweissnaht vorgesehen sein, die an den Befestigungskörper, den Ankerkörper und den Schienenkörper angrenzt, was beispielsweise durch Laserstrahltiefschweissen realisiert werden kann. Die Erfindung hat erkannt, dass hierdurch eine Verbindung zwischen Ankerkörper und Schienenkörper erhalten werden kann, die einerseits vergleichsweise hohe Zugkräfte, aber andererseits auch vergleichsweise hohe in das Schieneninnere gerichtete Rückdruckkräfte aufnehmen kann. Die hohen Zugkräfte können unter anderem darauf basieren, dass der Befestigungskörper einen Hinterschnittkörper bilden kann, der den Ankerkörper formschlüssig im Schienenkörper fixiert. Die hohen Rückdrückkräfte können unter anderem in der gemeinsamen stoffschlüssigen Verbindung begründet liegen, welche erfindungsgemäss in besonders einfacher Weise ohne zusätzlichen Prozessschritt realisiert wird. Im Vergleich mit einem Verfahren, bei dem die Ankerkörper in einer Stumpfverbindung auf der Aussenseite des Schienenkörpers angeschweisst werden, können beim erfindungsgemässen Verfahren dieselben Zuglasten bei kleineren Ankerquerschnittsflächen und/oder kleineren Materialstärken der Ankerschiene und/oder geringerer Materialfestigkeit der belasteten Teile erhalten werden. Darüber hinaus können die Anforderungen an die Präzision der Positionierung des Ankerkörpers relativ zum Schienenkörper und die Prozessschwankungen vergleichsweise gering sein. Aus diesen Gründen, aber auch aufgrund der vergleichsweise geringen Zahl von Prozessschritten, ist dabei ein besonders einfaches und wirtschaftliches Herstellungsverfahren gegeben.

Der Schienenkörper weist zweckmässigerweise einen zumindest annähernd C-förmigen Querschnitt auf, der auch mit einem V-förmigen Schienenrücken kombiniert werden kann. Der Schienenkörper ist vorzugsweise mit einem Längsschlitz versehen, an den längsseitig zwei Stege angrenzen. Diese Stege können von einer durch den Längsschlitz hindurch in den Innenraum der Schiene verlaufenden Hammerkopfschraube hintergriffen werden, wodurch die Hammerkopfschraube am Schienenkörper fixiert wird. Eine im erfindungsgemässen Verfahren hergestellte und/oder erfindungsgemässe Ankerschiene kann in Beton eingegossen werden, und zwar derart, dass der Längsschlitz von aussen zugänglich ist.

Der Ankerkörper kann insbesondere als Zuganker wirken und/oder ist vorzugsweise bolzenförmig ausgebildet. Der Ankerkörper weist bevorzugt einen Ankerfuss auf, der im Innenraum des Schienenkörpers im Befestigungskörper angeordnet wird, einen entgegengesetzt zum Ankerfuss angeordneten Ankerkopf, der ausserhalb des Schienenkörpers angeordnet wird, und einen zwischen Ankerfuss und Ankerkopf verlaufenden Ankerschaft, wobei der Ankerkopf zur gezielten Zugkrafteinleitung in den Beton vorzugsweise querschnittsgrösser als der Ankerschaft sein kann. Die Öffnung des Befestigungskörpers und die Durchgangsöffnung des Schienenkörpers weisen vorzugsweise zumindest annähernd denselben Querschnitt auf. Vorzugsweise entspricht die Querschnittsfläche der Öffnung des Befestigungskörpers und/oder die Querschnittsfläche der Durchgangsöffnung des Schienenkörpers der Querschnittsfläche des Ankerfusses, was eine Positionierung erleichtern kann. Insbesondere können die Querschnittsfläche des Ankerfuss, die Querschnittsfläche der Öffnung des Befestigungskörpers und/oder die Querschnittsfläche der Durchgangsöffnung des Schienenkörpers kreisrund sein. Beispielsweise kann der Ankerkörper als zylindrischer Kopfbolzen ausgeführt sein. Der Schienenkörper, der Befestigungskörper und/oder der Ankerkörper bestehen vorzugsweise aus einem Metallmaterial. Die Durchgangsöffnung und somit der Ankerkörper können insbesondere am Schienenrücken angeordnet sein. Der im Innenraum des Schienenkörpers angeordnete Befestigungskörper kann auch einen Fortsatz oder mehrere Fortsätze aufweisen, der beziehungsweise die aus dem Innenraum des Schienenkörpers nach aussen vorsteht beziehungsweise vorstehen.

Die im erfindungsgemässen Verfahren erhaltene Ankerschiene weist mehrere Ankerkörper auf. Das erfindungsgemässe Herstellungsverfahren kann bei einem der Ankerkörper der Ankerschiene, bei mehreren, aber nicht allen Ankerkörpern der Ankerschiene oder vorzugsweise bei sämtlichen Ankerkörpern der Ankerschiene zum Einsatz kommen, was das Verfahren noch wirtschaftlicher machen kann.

Vorzugsweise wird die Durchgangsöffnung des Schienenkörpers erzeugt bevor der Befestigungskörper in den Innenraum des Schienenkörpers eingebracht wird. Hierdurch kann die Verfahrensführung noch weiter vereinfacht werden. Beispielsweise kann die Durchgangsöffnung des Schienenkörpers durch Stanzen erzeugt werden. Das Erzeugen der Durchgangsöffnung des Schienenkörpers kann vor Beginn des erfindungsgemässen Verfahrens, grundsätzlich aber auch im Laufe des erfindungsgemässen Verfahrens geschehen. Der Ankerkörper wird zweckmässigerweise in der Öffnung des Befestigungskörpers angeordnet während sich der Befestigungskörper im Innenraum des Schienenkörpers befindet.

Zweckmässigerweise liegt der Befestigungskörper während des Fügeprozesses am Schienenkörper an, und zwar insbesondere auf der Innenseite des Schienenkörpers, und/oder ist der Ankerkörper während des Fügeprozesses in der Öffnung des Befestigungskörpers angeordnet.

Besonders bevorzugt ist der Fügeprozess ein Schweissprozess, vorzugsweise ein Laserstrahlschweissprozess, insbesondere ein Laserstrahltiefschweissprozess. Hiermit kann das gleichzeitige stoffschlüssige Verbinden in besonders einfacher Weise durchgeführt werden. Insbesondere kann vorgesehen sein, dass im Laserstrahlschweissprozess ein Laserstrahl durch den Innenraum des Schienenkörpers hindurch gestrahlt wird. Gemäss dieser Ausführungsform erfolgt der Schweissvorgang von der Innenseite des Schienenkörpers aus, was in besonders einfacher Weise besonders zuverlässige Schweissverbindungen ermöglicht. Zweckmässigerweise kann vorgesehen sein, dass der im Laserstrahlschweissprozess verwendete Laserstrahl durch den Längsschlitz des Schienenkörpers hindurch in den Innenraum des Schienenkörpers eintritt. Dies kann das Verfahren noch weiter vereinfachen, da der Laserstrahl durch eine ohnehin vorhandene Öffnung in den Innenraum des Schienenkörpers geführt wird. Besonders bevorzugt ist es, dass der im Laserstrahlschweissprozess verwendete Laserstrahl auf den Fügestoss zwischen Ankerkörper und Befestigungskörper fokussiert wird, wobei eine Brennfleckverschiebung sowohl in der Höhe als auch in Richtung eines der Fügepartner, das heisst Ankerkörper oder Befestigungskörper, aus prozesstechnischen Gründen sinnvoll sein kann.

Befestigungskörper und/oder den Ankerkörper gerichtet wird. Hierdurch kann die Qualität der Schweissverbindung noch weiter verbessert werden.

Gemäss einer weiteren bevorzugten Verfahrensvariante kann vorgesehen sein, dass die Öffnung des Befestigungskörpers deckungsgleich mit der Durchgangsöffnung des Schienenkörpers angeordnet wird, und dass der Ankerkörper im Anschluss an das deckungsgleiche Anordnen zugleich durch die Durchgangsöffnung des Schienenkörpers hindurchgeführt und in die Öffnung des Befestigungskörpers eingeführt wird. Im Anschluss hieran wird der Fügeprozess durchgeführt. Gemäss dieser Variante wird der Ankerkörper vor dem Fügeprozess in einem Zug sowohl in die Durchgangsöffnung des Schienenkörpers als auch in die Öffnung des Befestigungskörpers eingebracht. Die axiale Positionierung des Ankerkörpers im Befestigungskörper kann bündig, mit einem Unterstand zum Befestigungskörper oder mit einem Überstand zum Befestigungskörper erfolgen.

In einer alternativen Verfahrensvariante kann vorgesehen sein, dass der Befestigungskörper im Anschluss an das Hindurchführen des Ankerkörpers durch die Durchgangsöffnung des Schienenkörpers auf den hindurchgeführten Ankerkörper aufgesteckt wird, vorzugsweise im Innenraum des Schienenkörpers auf den hindurchgeführten Ankerkörper aufgesteckt wird. Im Anschluss hieran wird der Fügeprozess durchgeführt. Gemäss dieser Variante müssen die Durchgangsöffnung des Schienenkörpers und die Öffnung des Befestigungskörpers beim Hindurchführen des Ankerkörpers durch die Durchgangsöffnung des Schienenkörpers noch nicht deckungsgleich sein. Der Befestigungskörper kann vorzugsweise erst dann in den Innenraum des Schienenkörpers eingebracht werden, nachdem der Ankerkörper durch die Durchgangsöffnung des Schienenkörpers hindurchgeführt wurde. Grundsätzlich kann aber auch vorgesehen werden, dass sich der Befestigungskörper bereits im Innenraum der Schiene befindet, wenn der Ankerkörper durch die Durchgangsöffnung des Schienenkörpers hindurchgeführt wird. Die axiale Positionierung des Ankerkörpers im Befestigungskörper kann bündig, mit einem Unterstand zum Befestigungskörper oder mit einem Überstand zum Befestigungskörper erfolgen.

Die Öffnung des Befestigungskörpers könnte ein Sackloch sein. Besonders bevorzugt ist es aber, dass die Öffnung des Befestigungskörpers eine Durchgangsöffnung ist, also eine Öffnung, welche den Befestigungskörper vollständig durchdringt. Insbesondere kann der Befestigungskörper ein Ring sein. Hierdurch kann die Verfahrensführung noch weiter vereinfacht und die Lastaufnahme in besonders einfacher Weise noch weiter verbessert werden.

Eine weitere bevorzugte Variante besteht darin, dass der Befestigungskörper, zumindest dann, wenn die Durchgangsöffnung des Schienenkörpers und die Öffnung des Befestigungskörpers deckungsgleich sind, querschnittsgrösser ist als die Durchgangsöffnung des Schienenkörpers. Insbesondere kann der Befestigungskörper also so gross sein, dass er nicht durch die Durchgangsöffnung des Schienenkörpers passt. Hierdurch kann in besonders einfacher Weise eine noch zuverlässigere Verbindung zwischen Ankerkörper und Schienenkörper erhalten werden. Der Befestigungskörper hat für eine grosse Kontaktfläche mit dem Schienenkörper geeigneterweise eine Form, die mit der Innenseite des Schienenkörpers im Bereich der Durchgangsöffnung korrespondiert. Vorzugsweise kann die Durchgangsöffnung im Schienenrücken vorgesehen sein, so dass der Befestigungskörper geeigneterweise eine Form aufweist, die mit der Innenseite des Schienenrückens korrespondiert.

Eine erfindungsgemässe Ankerschiene ist dadurch gekennzeichnet, dass zumindest einer der Ankerkörper sowohl mit einem im Innenraum des Schienenkörpers angeordneten Befestigungskörper als auch mit dem Schienenkörper unmittelbar stoffschlüssig verbunden, verzugsweise verschweisst, ist. Insbesondere kann die Ankerschiene eine gemeinsame Schweissnaht aufweisen, welche an den zumindest einen Ankerkörper, den Befestigungskörper und an den Schienenkörper angrenzt. Die Ankerschiene kann insbesondere in einem erfindungsgemässen Verfahren hergestellt sein. Die beschriebene Art der Befestigung kann bei einem der Ankerkörper der Ankerschiene, bei mehreren, aber nicht allen Ankerkörpern der Ankerschiene oder vorzugsweise bei sämtlichen Ankerkörpern der Ankerschiene vorgesehen sein.

Merkmale, die im Zusammenhang mit dem erfindungsgemässen Herstellungsverfahren diskutiert werden, können auch bei der erfindungsgemässen Ankerschiene zum Einsatz kommen, so wie umgekehrt Merkmale, die im Zusammenhang mit der erfindungsgemässen Ankerschiene diskutiert werden, auch beim erfindungsgemässen Herstellungsverfahren zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine geschnittene perspektivische Darstellung einer in einem erfindungsgemässen Verfahren gefertigten, erfindungsgemässen Ankerschiene;
- Figur 2:: eine Seitenansicht der Ankerschiene aus Figur 1;
- Figur 3:: eine Vorderansicht der Ankerschiene aus Figur 1 mit einer zusätzlichen Hammerkopfschraube;
- Figuren 4 bis 8: zeitlich aufeinanderfolgende Prozessstadien bei der Herstellung einer Ankerschiene gemäss Figuren 1 bis 3 in einer ersten Verfahrensvariante, wobei eine höhere Nummer der Figur ein späteres Prozessstadium bedeutet; und
- Figuren 9 bis 13: zeitlich aufeinanderfolgende Prozessstadien bei der Herstellung einer Ankerschiene gemäss Figuren 1 bis 3 in einer zweiten Verfahrensvariante, wobei eine höhere Nummer der Figur ein späteres Prozessstadium bedeutet.

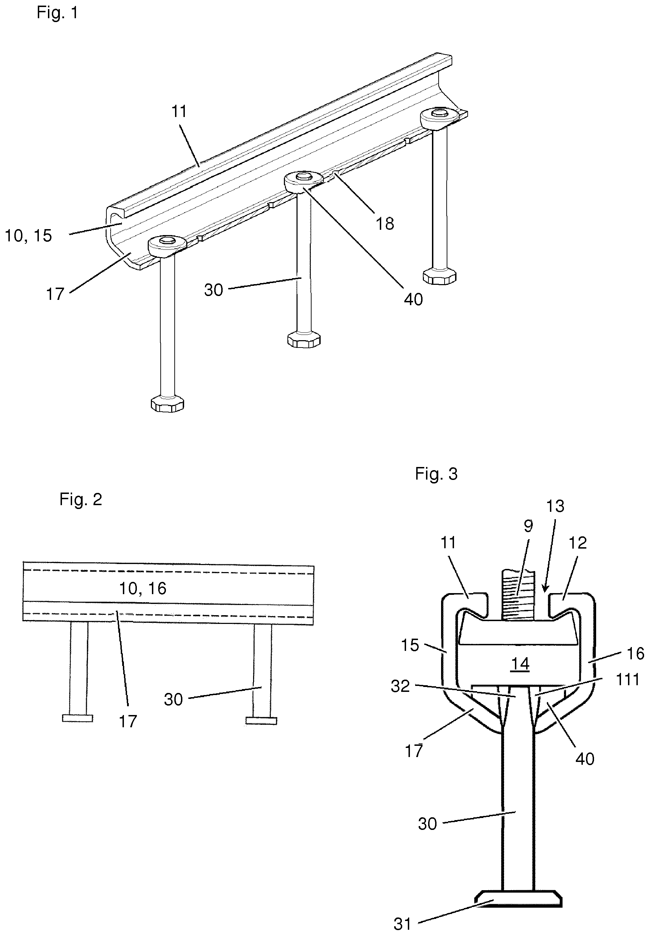

Die Figuren 1 bis 3 zeigen eine erfindungsgemässe Ankerschiene, welche in einem erfindungsgemässen Verfahren gefertigt werden kann.

Die Ankerschiene weist einen im Querschnitt etwa C-förmigen Schienenkörper 10 auf, an dem mehrere Ankerkörper 30 beabstandet zueinander befestigt sind. Der Schienenkörper 10 weist zwei vorzugsweise parallel zueinander verlaufende Seitenwände 15 und 16 auf, die durch einen Schienenrücken 17 verbunden sind, wobei der Schienenrücken 17 im vorliegenden Fall im Querschnitt V-förmig ausgeführt ist, grundsätzlich aber z. B. auch eben ausgeführt sein kann. Die Ankerkörper 30 sind am Schienenrücken 17 des Schienenkörpers 10 mit dem Schienenkörper 10 verbunden. An der ersten Seitenwand 15 steht ein erster Steg 11 zur zweiten Seitenwand 16 hin vor. Entsprechend steht an der zweiten Seitenwand 16 ein zweiter Steg 12 zur ersten Seitenwand 15 hin vor. Zwischen den beiden Stegen 11 und 12 ist ein Längsschlitz 13 ausgebildet. Durch diesen Längsschlitz 13 kann der Kopf einer Hammerkopfschraube 9 in den Innenraum 14 des Schienenkörpers 10 eingeführt werden, wobei die Hammerkopfschraube 9 sodann durch Drehung um ihre Längsachse an den beiden Stegen 11 und 12, welche jeweils eine Hinterschneidung bilden, formschlüssig festgelegt werden kann. Dieser festgelegte Zustand der Hammerkopfschraube 9 ist in Figur 3 gezeigt.

Am Schienenrücken 17, also an der Seite des Schienenkörpers 10, welche dem Längsschlitz 13 gegenüberliegt, sind eine Vielzahl von Nagellöchern 18 im Schienenkörper 10 vorgesehen, welche dazu dienen, die Ankerschiene vor dem Betonieren an einer Schalung festzulegen.

Wie nachfolgend im Detail erläutert wird, ist zumindest ein Teil der Ankerkörper 30, vorzugsweise alle Ankerkörper 30, jeweils mittels eines ringförmigen Befestigungskörpers 40 an der Schiene befestigt. Die Befestigungskörper 40 befinden sich im Innenraum 14 des Schienenkörpers 10, und sind sowohl mit dem Schienenkörper 10, insbesondere mit dessen Schienenrücken 17, als auch mit dem jeweiligen Ankerkörper 30 stoffschlüssig verbunden, insbesondere verschweisst. Insbesondere weist die Ankerschiene gemeinsame Schweissnähte 111, vorzugsweise Laserstrahlschweissnähte auf, welche an den jeweiligen Ankerkörper 30, den jeweiligen Befestigungskörper 40 und an den Schienenkörper 10 angrenzen.

Wie insbesondere Figur 3 zeigt, weisen die Ankerkörper 30 jeweils einen ausserhalb des Schienenkörpers 10 angeordneten Ankerkopf 31 und einen im Innenraum 14 des Schienenkörpers 10 angeordneten Ankerfuss 32 auf. Der Ankerkopf 31 bildet bevorzugt eine lokale Querschnittsverbreiterung. Die stoffschlüssige Verbindung des Ankerkörpers 30 mit dem Befestigungskörper 40 ist am Ankerfuss 32 gebildet.

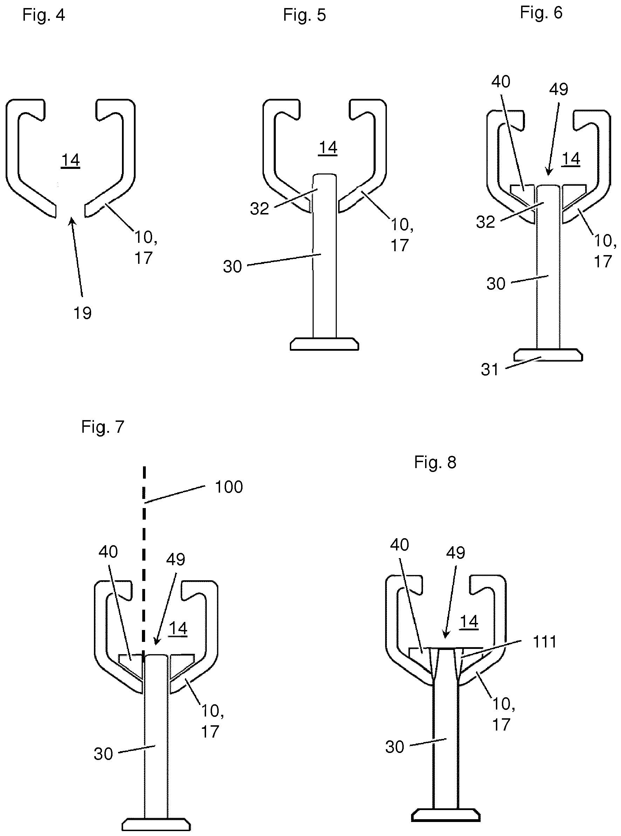

Die Figuren 4 bis 8 zeigen eine Stadienfolge bei einer ersten Ausführungsform eines Herstellungsverfahrens für eine Ankerschiene gemäss Figuren 1 bis 3.

Bei der Verfahrensvariante der Figuren 4 bis 8 wird, wie in Figur 4 gezeigt, zunächst der Schienenkörper 10 mit zumindest einer Durchgangsöffnung 19 im Schienenrücken 17 vorgesehen. Die Durchgangsöffnung 19 reicht von der Aussenseite des Schienenkörpers 10 in den Innenraum 14 des Schienenkörpers 10 und ist vorzugsweise kreisförmig ausgebildet.

Sodann wird, wie in Figur 5 gezeigt, ein Ankerkörper 30 durch die Durchgangsöffnung 19 des Schienenkörpers 10 hindurchgeführt. Der Ankerfuss 32 des Ankerkörpers 30 befindet sich daraufhin im Innenraum 14 des Schienenkörpers 10 und der Ankerkopf 31 des Ankerkörpers 30 ausserhalb des Schienenkörpers 10. Insbesondere kann der Ankerkörper 30 von aussen in den Schienenkörper 10 eingesteckt werden, das heisst der Ankerkörper 30 wird insbesondere mit dem Ankerfuss 32 voraus in die Durchgangsöffnung 19 des Schienenkörpers 10 eingeführt.

Im nächsten Schritt, welcher in Figur 6 gezeigt ist, wird ein ringförmiger Befestigungskörper 40 im Innenraum 14 des Schienenkörpers 10 auf den Ankerkörper 30, nämlich seinen Ankerfuss 32, aufgesteckt, wobei der Ankerkörper 30, nämlich seinen Ankerfuss 32, in einer Öffnung 49 des Befestigungskörpers 40 angeordnet wird. Ferner wird der Befestigungskörper 40 in Kontakt mit dem Schienenkörpers 10, vorzugsweise seinem Schienenrücken 17 gebracht.

Sodann wird, wie in Figur 7 gezeigt, ein Laserstrahlschweissprozess durchgeführt, bei welchem der Ankerkörper 30 mit dem Befestigungskörper 40 und dem Schienenkörper 10 stoffschlüssig verbunden wird. Wie Figur 7 zeigt, wird hierbei vorzugsweise ein Laserstrahl 100 durch den Schienenkörper 10 hindurch auf den Befestigungskörper 40 und/oder den Ankerkörper 30 gerichtet.

Die fertige Ankerschiene ist in Figur 8 gezeigt. Wie dort erkennbar ist, sind der Schienenkörper 10, der Befestigungskörper 40 und der Ankerkörper 30 durch eine gemeinsame Schweissnaht 111 verbunden.

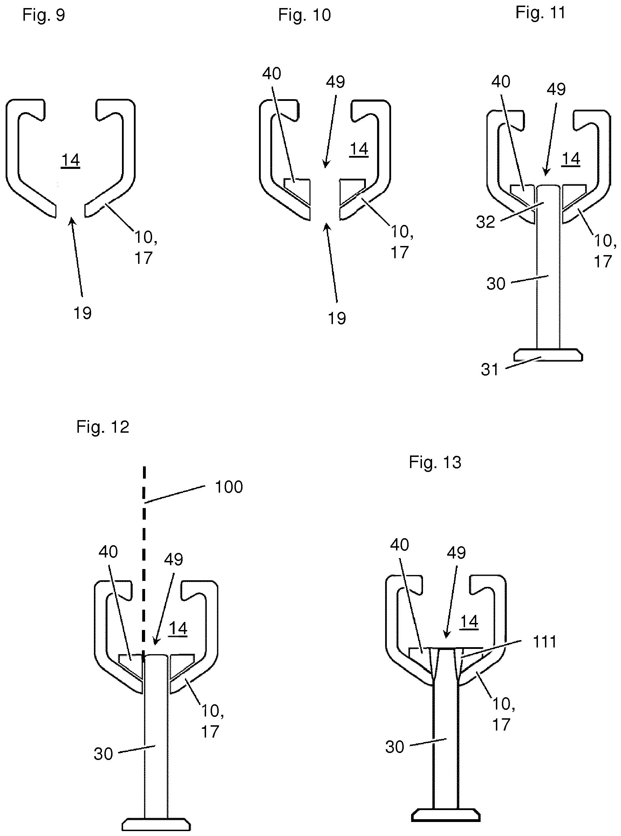

Die Figuren 9 bis 13 zeigen eine Stadienfolge bei einer zweiten Ausführungsform eines Herstellungsverfahrens für eine Ankerschiene gemäss Figuren 1 bis 3.

Auch bei der Verfahrensvariante der Figuren 9 bis 13 wird, wie in Figur 9 gezeigt, zunächst der Schienenkörper 10 mit zumindest einer Durchgangsöffnung 19 im Schienenrücken 17 vorgesehen. Die Durchgangsöffnung 19 reicht von der Aussenseite des Schienenkörpers 10 in den Innenraum 14 des Schienenkörpers 10 und ist vorzugsweise kreisförmig ausgebildet.

Sodann wird, wie in Figur 10 gezeigt, ein ringförmiger Befestigungskörper 40 mit einer Öffnung 49 vorgesehen und so im Innenraum 14 des Schienenkörpers 10 angeordnet, dass die Öffnung 49 des Befestigungskörpers 40 mit der Durchgangsöffnung 19 des Schienenkörpers 10 fluchtet und zur Durchgangsöffnung 19 des Schienenkörpers 10 hin offen ist.

Im nächsten Schritt, welcher in Figur 11 gezeigt ist, wird ein Ankerkörper 30 von aussen durch die Durchgangsöffnung 19 des Schienenkörpers 10 hindurchgeführt und dabei, insbesondere mit seinem Ankerfuss 32, in die Öffnung 49 des Befestigungskörpers 40 eingeführt. Bereits vor diesem Schritt, oder auch danach, wird der Befestigungskörper 40 in Kontakt mit dem Schienenrücken 17 gebracht.

Sodann wird, wie in Figur 12 gezeigt, ein Laserstrahlschweissprozess durchgeführt, bei welchem der Ankerkörper 30 mit dem Befestigungskörper 40 und dem Schienenkörper 10 stoffschlüssig verbunden wird. Wie Figur 12 zeigt, wird hierbei vorzugsweise ein Laserstrahl 100 durch den Schienenkörper 10 hindurch auf den Befestigungskörper 40 und/oder den Ankerkörper 30 gerichtet.

Die fertige Ankerschiene ist in Figur 13 gezeigt. Wie dort erkennbar ist, sind der Schienenkörper 10, der Befestigungskörper 40 und der Ankerkörper 30 durch eine gemeinsame Schweissnaht 111 verbunden.

Sowohl bei der Verfahrensvariante der Figuren 4 bis 8 als auch bei der Verfahrensvariante der Figuren 9 bis 13 ist die Öffnung 49 des Befestigungskörpers 40 als Durchgangsöffnung dargestellt. Grundsätzlich könnte sie aber auch als Sackloch ausgebildet sein, welches zum Ankerkörper 30 hin offen ist.

## Patentansprüche

1. Verfahren zum Herstellen einer Ankerschiene mit einem Schienenkörper (10) sowie mit Ankerkörpern (30), welche am Schienenkörper (10) befestigt sind, bei dem
- ein Befestigungskörper (40), welcher mit einer Öffnung (49) versehen ist, im Innenraum (14) des Schienenkörpers (10) angeordnet wird,
- ein Ankerkörper (30) durch eine im Schienenkörper (10) vorgesehene Durchgangsöffnung (19) hindurchgeführt wird,
- der Ankerkörper (30) in der Öffnung (49) des Befestigungskörpers (40) angeordnet wird, und
- der Ankerkörper (30) in einem Fügeprozess zugleich mit dem Befestigungskörper (40) und mit dem Schienenkörper (10) unmittelbar stoffschlüssig verbunden wird.

2. Verfahren nach Anspruch 1,
**dadurch gekennzeichnet,**
**dass** der Fügeprozess ein Schweissprozess, nämlich ein Laserstrahlschweissprozess ist.

3. Verfahren nach Anspruch 2,
**dadurch gekennzeichnet,**
**dass** im Laserstrahlschweissprozess ein Laserstrahl (100) durch den Innenraum (14) des Schienenkörpers (10) hindurch gestrahlt wird.

4. Verfahren nach einem der vorstehenden Ansprüche,
**dadurch gekennzeichnet,**
**dass** die Öffnung (49) des Befestigungskörpers (40) deckungsgleich mit der Durchgangsöffnung (19) des Schienenkörpers (10) angeordnet wird, und dass der Ankerkörper (30) im Anschluss an das deckungsgleiche Anordnen zugleich durch die Durchgangsöffnung (19) des Schienenkörpers (10) hindurchgeführt und in die Öffnung (49) des Befestigungskörpers (40) eingeführt wird.

5. Verfahren nach einem der Ansprüche 1 bis 3,
**dadurch gekennzeichnet,**
**dass** der Befestigungskörper (40) im Anschluss an das Hindurchführen des Ankerkörpers (30) durch die Durchgangsöffnung (19) des Schienenkörpers (10) auf den hindurchgeführten Ankerkörper (30) aufgesteckt wird.

6. Verfahren nach einem der vorstehenden Ansprüche,
**dadurch gekennzeichnet,**
**dass** die Öffnung (49) des Befestigungskörpers (40) eine Durchgangsöffnung ist.

7. Verfahren nach einem der vorstehenden Ansprüche,
**dadurch gekennzeichnet,**
**dass** der Befestigungskörper (40) querschnittsgrösser ist als die Durchgangsöffnung (19) des Schienenkörpers (10).

8. Ankerschiene mit einem Schienenkörper (10) sowie mit Ankerkörpern (30), welche am Schienenkörper (10) befestigt sind,
**dadurch gekennzeichnet,**
**dass** zumindest einer der Ankerkörper (30) sowohl mit einem im Innenraum (14) des Schienenkörpers (10) angeordneten Befestigungskörper (40) als auch mit dem Schienenkörper (10) unmittelbar stoffschlüssig verbunden ist.

9. Ankerschiene nach Anspruch 8,
**dadurch gekennzeichnet,**
**dass** sie eine gemeinsame Schweissnaht (111) aufweist, welche an den zumindest einen Ankerkörper (30), den Befestigungskörper (40) und an den Schienenkörper (10) angrenzt.

10. Ankerschiene nach Anspruch 8 oder Anspruch 9,
**dadurch gekennzeichnet,**
**dass** sie in einem Verfahren nach einem der Ansprüche 1 bis 7 hergestellt ist.

## Claims

1. Method for producing an anchor rail comprising a rail body (10) and comprising anchor bodies (30) which are fastened to the rail body (10), wherein
- a fastening body (40) which is provided with an opening (49) is arranged in the interior (14) of the rail body (10),
- an anchor body (30) is guided through a through-opening (19) provided in the rail body (10),
- the anchor body (30) is arranged in the opening (49) in the fastening body (40), and
- the anchor body (30) is directly integrally bonded simultaneously to the fastening body (40) and to the rail body (10) in a joining process.

2. Method according to claim 1, **characterized in that** the joining process is a welding process, specifically a laser beam welding process.

3. Method according to claim 2, **characterized in that**, in the laser beam welding process, a laser beam (100) is radiated through the interior (14) of the rail body (10).

4. Method according to any of the preceding claims, **characterized in that** the opening (49) in the fastening body (40) is arranged congruently with respect to the through-opening (19) in the rail body (10), and **in that**, subsequently to the congruent arrangement, the anchor body (30) is simultaneously guided through the through-opening (19) in the rail body (10) and introduced into the opening (49) in the fastening body (40).

5. Method according to any of claims 1 to 3, **characterized in that**, subsequently to guiding the anchor body (30) through the through-opening (19) in the rail body (10), the fastening body (40) is plugged onto the anchor body (30) that has been guided through.

6. Method according to any of the preceding claims, **characterized in that** the opening (49) in the fastening body (40) is a through-opening.

7. Method according to any of the preceding claims, **characterized in that** the fastening body (40) has a larger cross section than the through-opening (19) in the rail body (10).

8. Anchor rail comprising a rail body (10) and comprising anchor bodies (30) which are fastened to the rail body (10), **characterized in that** at least one of the anchor bodies (30) is directly integrally bonded both to a fastening body (40) arranged in the interior (14) of the rail body (10) and to the rail body (10).

9. Anchor rail according to claim 8, **characterized in that** it has a common weld seam (111) which adjoins the at least one anchor body (30), the fastening body (40) and the rail body (10).

10. Anchor rail according to either claim 8 or claim 9, **characterized in that** it is produced in a method according to any of claims 1 to 7.

## Revendications

1. Procédé de fabrication d'un rail d'ancrage comportant un corps de rail (10) et des corps d'ancrage (30) fixés au corps de rail (10),
- un corps de fixation (40), qui est pourvu d'une ouverture (49), étant disposé dans l'espace intérieur (14) du corps de rail (10),
- un corps d'ancrage (30) traversant une ouverture traversante (19) prévue dans le corps de rail (10),
- le corps d'ancrage (30) étant disposé dans l'ouverture (49) du corps de fixation (40), et
- le corps d'ancrage (30) étant relié directement par liaison de matière, dans un processus d'assemblage, à la fois au corps de fixation (40) et au corps de rail (10).

2. Procédé selon la revendication 1,
**caractérisé**
**en ce que** le processus d'assemblage est un processus de soudage, notamment un processus de soudage par faisceau laser.

3. Procédé selon la revendication 2,
**caractérisé**
**en ce que**, dans le processus de soudage par faisceau laser, un faisceau laser (100) est émis à travers l'espace intérieur (14) du corps de rail (10).

4. Procédé selon l'une des revendications précédentes,
**caractérisé**
**en ce que** l'ouverture (49) du corps de fixation (40) est disposée de manière à coïncider avec l'ouverture traversante (19) du corps de rail (10), et **en ce que** le corps d'ancrage (30), une fois que la disposition coïncide, traverse l'ouverture traversante (19) du corps de rail (10) et est inséré simultanément dans l'ouverture (49) du corps de fixation (40).

5. Procédé selon l'une des revendications 1 à 3,
**caractérisé**
**en ce que**, après le passage du corps d'ancrage (30) à travers l'ouverture traversante (19) du corps de rail (10), le corps de fixation (40) est monté sur le corps d'ancrage (30) traversant ladite ouverture.

6. Procédé selon l'une des revendications précédentes,
**caractérisé**
**en ce que** l'ouverture (49) du corps de fixation (40) est une ouverture traversante.

7. Procédé selon l'une des revendications précédentes,
**caractérisé**
**en ce que** le corps de fixation (40) présente une section transversale plus grande que celle de l'ouverture traversante (19) du corps de rail (10).

8. Rail d'ancrage comportant un corps de rail (10) et des corps d'ancrage (30) fixés au corps de rail (10),
**caractérisé**
**en ce qu'**au moins l'un des corps d'ancrage (30) est relié directement par liaison de matière à la fois à un corps de fixation (40) disposé dans l'espace intérieur (14) du corps de rail (10) et au corps de rail (10).

9. Rail d'ancrage selon la revendication 8,
**caractérisé**
**en ce qu'**il présente un cordon de soudure commun (111) qui jouxte l'au moins un corps d'ancrage (30), le corps de fixation (40) et le corps de rail (10).

10. Rail d'ancrage selon la revendication 8 ou la revendication 9,
**caractérisé**
**en ce qu'**il est fabriqué dans un procédé selon l'une des revendications 1 à 7.
